# EUROPEAN PATENT APPLICATION

(11) **EP 4 446 082 A1**
(43) Date of publication of application: **16.10.2024**
(21) Application number: 22907205.3
(22) Date of filing: 30.11.2022
(51) Int. Cl.: B29C 35/04, B29C 70/44

(54) **AUXILIARY MOLDING EQUIPMENT, MOLDING EQUIPMENT, AND MOLDING METHOD**

(30) Priority: 17.12.2021 JP 2021204752
(71) Applicant: KAWASAKI JUKOGYO KABUSHIKI KAISHA, Kobe-shi, Hyogo 650-8670 (JP)
(72) Inventor: OSHIMA, Masahiro, Hyogo, 650-8670 (JP); KAIMORI, Masaaki, Gifu 504-0847 (JP)
(74) Representative: Leinweber & Zimmermann
(86) International application number: PCT/JP2022/044160
(87) International publication number: WO 2023/112676

(57) **Abstract**

Auxiliary molding equipment includes a tubular body including a first end opening, a second end opening, and an internal passage through which the first end opening and the second end opening communicate with each other. The tubular body includes: a first tubular portion located in an internal space of the heating target object; and a second tubular portion that is located so as to project to an outside of the heating target object through an opening of the heating target object and has an outer shape expanding toward the second end opening.

## Description

### Technical Field

The present disclosure relates to auxiliary molding equipment, molding equipment, and a molding method.

### Background Art

PTL 1 discloses that: a heating target object including a cylindrical molding jig and a prepreg placed on an outer periphery of the molding jig is placed in an autoclave; and a composite is molded by a heating gas circulating in the autoclave. A diffusion net is located in an inner space of the heating target object. The diffusion net partially obstructs the flow of the heating gas in an axial direction of the molding jig to diffuse the heating gas toward a low temperature region of the molding jig.

### Citation List

### Patent Literature

PTL 1: Japanese Patent No. 4805230

### Summary of Invention

### Technical Problem

However, when heating a bottomed tubular heating target object with the autoclave, the heating gas stays in an internal space of the heating target object due to the shape of the heating target object. As a result, it is difficult to make the heating gas adequately flow through a side where an inner peripheral surface of the heating target object is located. Therefore, it is difficult to increase or decrease the temperature of the heating target object at a predetermined rate. Due to the same reason, it may also be difficult to uniformly heat the heating target object.

An object of the present disclosure is to, when heating a bottomed tubular heating target object with an autoclave, make a heating gas properly flow through a side where an inner peripheral surface of the heating target object is located.

### Solution to Problem

Auxiliary molding equipment according to one aspect of the present disclosure is auxiliary molding equipment that heats a bottomed tubular heating target object in a heating passage with an autoclave to mold a molding target object, the autoclave including the heating passage including an inlet port into which a heating gas flows and an outlet port from which the heating gas flows out, the heating target object including the molding target object and an opening. The auxiliary molding equipment includes a tubular body including: a first end opening, a second end opening located at an opposite side of the first end opening, and an internal passage through which the first end opening and the second end opening communicate with each other. The tubular body includes: a first tubular portion that includes the first end opening and is located in an internal space of the heating target object; and a second tubular portion that includes the second end opening, is located so as to project to an outside of the heating target object through the opening of the heating target object, and has an outer shape expanding toward the second end opening.

Molding equipment according to one aspect of the present disclosure includes: the auxiliary molding equipment; and an autoclave including a heating passage including an inlet port into which a heating gas flows and an outlet port from which the heating gas flows out.

A molding method according to one aspect of the present disclosure includes: preparing an autoclave including a heating passage including an inlet port into which a heating gas flows and an outlet port from which the heating gas flows out; placing a bottomed tubular heating target object in the heating passage, the heating target object including a molding target object and an opening; preparing a tubular body including a first tubular portion that includes a first end opening, a second tubular portion that includes a second end opening located at an opposite side of the first end opening and has an outer shape expanding toward the second end opening, and an internal passage through which the first end opening and the second end opening communicate with each other; placing the tubular body in the heating passage such that the first tubular portion of the tubular body is located in an internal space of the heating target object, and the second tubular portion of the tubular body is located so as to project to an outside of the heating target object through the opening of the heating target object; and generating a flow of the heating gas from the inlet port to the outlet port in the heating passage.

### Advantageous Effects of Invention

According to one aspect of the present disclosure, the internal space of the bottomed tubular heating target object is divided into: the internal passage of the tubular body; an annular passage between an outer peripheral surface of the first tubular portion of the tubular body and the inner peripheral surface of the heating target object; and a return passage between a bottom portion of the heating target object and the tubular body. Therefore, a unidirectional passage including the internal passage, the return passage, and the annular passage is formed in the internal space of the heating target object. Then, the outer shape of the second tubular portion of the tubular body expands toward the second end opening. Therefore, regarding the heating gas flowing through the heating passage, there is a difference between the ease of the flow of the heating gas into the annular passage and the ease of the flow of the heating gas into the internal passage of the tubular body. Thus, the flow in the unidirectional passage including the internal passage, the return passage, and the annular passage is generated, and the heating gas hardly stays in the internal space of the heating target object. As a result, the heating gas can be made to properly flow through a side where the inner peripheral surface of the heating target object is located.

### Brief Description of Drawings

FIG. 1 is a sectional view showing an autoclave and a heating target object according to Embodiment 1.
FIG. 2 is a partial sectional view showing a tubular portion of the heating target object of FIG. 1.
FIG. 3 is a sectional view showing auxiliary molding equipment according to Embodiment 1.
FIG. 4 is a sectional view showing a modified example of a tubular body of FIG. 3.
FIG. 5 is a sectional view showing that the auxiliary molding equipment of FIG. 3 is located in a heating passage of the autoclave of FIG. 1.
FIG. 6 is a flowchart for explaining a molding procedure of a molding target object.
FIG. 7 is a sectional view showing the tubular body and the like according to Embodiment 2.
FIG. 8 is a sectional view showing the tubular body and the like according to Embodiment 3.
FIG. 9 is a sectional view showing the tubular body and the like according to Embodiment 4.
FIG. 10 is a sectional view showing the tubular body and the like according to Embodiment 5.
FIG. 11 is a sectional view showing the tubular body and the like according to Embodiment 6.
FIG. 12 is a sectional view showing the tubular body and the like according to Embodiment 7.
FIG. 13 is a sectional view showing the tubular body and the like according to Embodiment 8.

### Description of Embodiments

Hereinafter, embodiments will be described with reference to the drawings.

### Embodiment 1

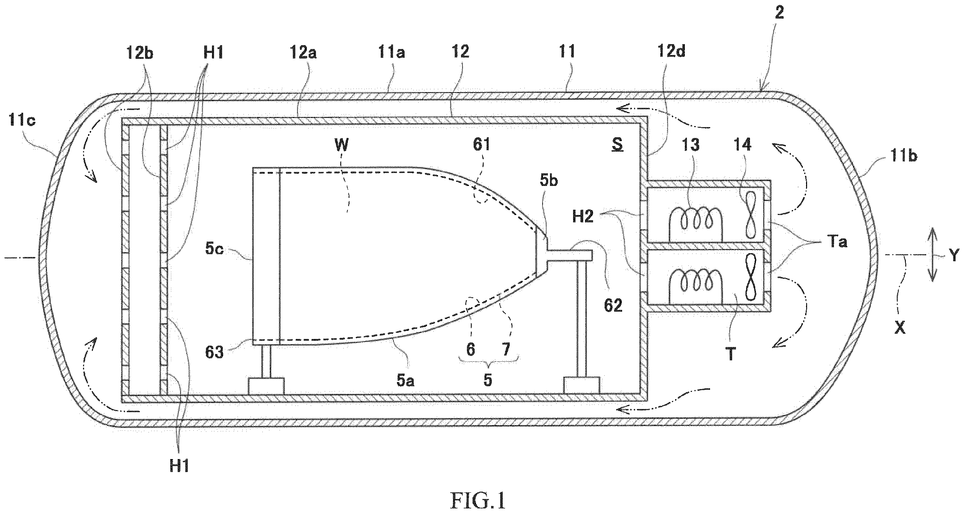

FIG. 1 is a sectional view showing an autoclave 2 and a heating target object 5 according to Embodiment 1. As shown in FIG. 1, the autoclave 2 includes an outer shell 11 and an inner shell 12 located inside the outer shell 11. The outer shell 11 includes a tubular wall portion 11a, an end wall portion 11b, and an end wall portion 11c. The tubular wall portion 11a has a cylindrical shape. The end wall portion 11b is a fixed plate that closes an opening of one axial end of the tubular wall portion 11a. The end wall portion 11b has a dome shape that is convex toward one side in an axial direction of the tubular wall portion 11a. The end wall portion 11c is a movable wall that closes an opening of the other axial end of the tubular wall portion 11a. The end wall portion 11c has a dome shape that is convex toward the other side in the axial direction of the tubular wall portion 11a. To be specific, in the autoclave 2, the opening of the other axial end of the tubular wall portion 11a can be opened or closed by opening or closing the end wall portion 11c.

There is a gap between the inner shell 12 and the outer shell 11. The inner shell 12 includes a heating passage S and a heater chamber T. The heating passage S is a passage through which a heating gas having flowed therein flows from an upstream side to a downstream side. The inner shell 12 includes a tubular plate portion 12a, at least one straightening plate portion 12b, and an end plate portion 12d. The tubular plate portion 12a has a cylindrical shape and defines the heating passage S. A center axis of the tubular wall portion 11a of the outer shell 11 and a center axis of the tubular plate portion 12a of the inner shell 12 coincide with each other. Moreover, a direction along the center axis of the tubular wall portion 11a of the outer shell 11 and the center axis of the tubular plate portion 12a of the inner shell 12 is an axial direction X of the autoclave 2. The straightening plate portion 12b closes an opening of the cylindrical shape of the tubular plate portion 12a, the opening being located close to the end wall portion 11c. In the present embodiment, there are two straightening plate portions 12b which are spaced apart from each other in the axial direction X. However, the number of straightening plate portions 12b may be one or three or more. Each straightening plate portion 12b is a plate on which straightening holes are entirely and distributedly located. The straightening plate portion 12b facing the heating passage S is located at the most upstream side of the gas flow of the heating passage S. Straightening holes H1 of the straightening plate portion 12b facing the heating passage S are inlet ports H1 of the heating passage S through which the heating gas flows into the heating passage S. The straightening plate portions 12b are plates which are attached to the inner shell 12 so as to be movable relative to the inner shell 12. The straightening plate portions 12b close the opening of the tubular plate portion 12a, the opening being opposed to the end wall portion 11c that is a movable wall.

The end plate portion 12d closes an opening of the tubular plate portion 12a, the opening being located close to the end wall portion 11b. The end plate portion 12d defines the heating passage S from the downstream side. The heater chamber T is attached to a side of the end plate portion 12d, the side being located close to the end wall portion 11b. The end plate portion 12d includes outlet ports H2. The heating gas in the heating passage S flows out to the heater chamber T through the outlet ports H2. To be specific, the end plate portion 12d is located at the most downstream side of the gas flow of the heating passage S. A heater 13 and a fan 14 are located in the heater chamber T. The heater 13 heats the gas in the heater chamber T. The fan 14 circulates the gas which has been heated by the heater 13. The heater chamber T includes discharge ports Ta. The heating gas is discharged through the discharge ports Ta to the end wall portion 11b by the fan 14.

The heating gas which has been heated by the heater 13 and discharged to the end wall portion 11b by the fan 14 makes a U-turn by the end wall portion 11b and flows through a space between the tubular wall portion 11a of the outer shell 11 and the tubular plate portion 12a of the inner shell 12 to the end wall portion 11c. Then, the heating gas makes a U-turn by the end wall portion 11c and is straightened through the straightening plate portions 12b and 12c. The straightened heating gas flows through the heating passage S and returns to the heater chamber T. In the heating passage S, the heating gas flows mainly in the axial direction X of the autoclave 2 from the inlet ports H1 to the outlet ports H2. The axial direction X of the autoclave 2 is the axial direction X of the heating passage S. A direction orthogonal to the axial direction X of the heating passage S is referred to as a radial direction Y of the heating passage S.

The bottomed tubular heating target object 5 is located in the heating passage S. The heating target object 5 includes a tubular portion 5a, a bottom portion 5b, and an opening 5c. The tubular portion 5a defines an internal space W. For example, the tubular portion 5a has a streamline shape that tapers toward the outlet ports H2. The bottom portion 5b closes one axial side of the tubular portion 5a. In the present embodiment, the bottom portion 5b closes a tapered tip side of the tubular portion 5a. The bottom portion 5b may completely close the tapered tip side of the tubular portion 5a or may partially close the tapered tip side of the tubular portion 5a. To be specific, the bottom portion 5b may include an opening or openings. Similarly, the tubular portion 5a may include an opening or openings. The internal space W of the heating target object 5 is open toward the inlet ports H1 through the opening 5c. The opening 5c is located in a region of the heating passage S, the region being located close to the inlet ports H1. The bottom portion 5b is located in a region of the heating passage S, the region being located close to the outlet ports H2.

The heating target object 5 includes a molding jig 6 and a molding target object 7 attached to the molding jig 6. The molding jig 6 includes a tubular jig 61, a tip supporting tool 62, and an opening supporting tool 63. The tubular jig 61 is a jig having a tubular shape. The tubular jig 61 supports the tubular molding target object 7. For example, the tubular jig 61 has a streamline shape that tapers toward the outlet ports H2. The tip supporting tool 62 is located at the inner shell 12. The tip supporting tool 62 completely or partially closes an opening of the tubular jig 61, the opening being located close to the outlet ports H2. The tip supporting tool 62 supports one end portion of the tubular jig 61. The opening supporting tool 63 is located at the inner shell 12. The opening supporting tool 63 supports the other end portion of the tubular jig 61 while opening an opening of the tubular jig 61, the opening being located close to the inlet ports H1.

The molding target object 7 is located at the tubular jig 61 of the molding jig 6. For example, the molding target object 7 is a prepreg laminated body used to mold a forward body, which is a nose section of an aircraft, as a composite including, for example, fiber-reinforced resin. However, the material of the molding target object 7 is not limited to this. An inside of the autoclave 2 is set to a nitrogen gas atmosphere, and the autoclave 2 heats the heating target object 5 for a predetermined time while applying pressure to the heating target object 5. By this operation, the molding target object 7 is molded as the composite.

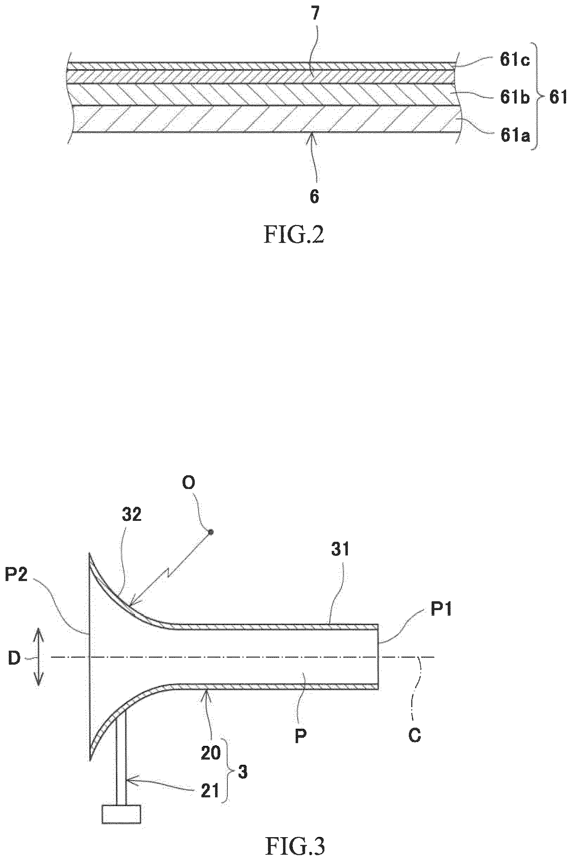

FIG. 2 is a partial sectional view showing the tubular portion 5a of the heating target object 5 of FIG. 1. As shown in FIG. 2, for example, the tubular jig 61 of the molding jig 6 includes a molding die 61a, a face plate 61b, and a cowl plate 61c. In the present embodiment, the molding die 61a is a cylindrical structural body, and an inner peripheral surface of the molding die 61a faces the internal space W. The face plate 61b is located on an outer peripheral surface of the molding die 61a. The molding target object 7 is located on an outer peripheral surface of the face plate 61b. The cowl plate 61c is located on an outer peripheral surface of the molding target object 7. An outer peripheral surface of the cowl plate 61c is opposed to an inner peripheral surface of the tubular plate portion 12a of the inner shell 12 shown in FIG. 1. To be specific, the molding target object 7 increases in temperature at a predetermined rate by heat input from the inner peripheral surface of the molding die 61a and heat input from the outer peripheral surface of the cowl plate 61c.

FIG. 3 is a sectional view showing auxiliary molding equipment 3 according to Embodiment 1. As shown in FIG. 3, the auxiliary molding equipment 3 includes a tubular body 20 and a supporting body 21. The supporting body 21 supports the tubular body 20 by connecting the tubular body 20 to the autoclave 2 or the heating target object 5 shown in FIG. 1. The tubular body 20 includes a first end opening P1, a second end opening P2, and an internal passage P. The first end opening P1 is one end opening of the tubular body 20 in a longitudinal direction of the tubular body 20. The second end opening P2 is the other end opening of the tubular body 20 in the longitudinal direction of the tubular body 20. The second end opening P2 is located at an opposite side of the first end opening P1. The internal passage P is a space defined by an inner peripheral surface of the tubular body 20. The first end opening P1 communicates with the second end opening P2 through the internal passage P. The tubular body 20 includes an axis C that is a center line of the internal passage P. A direction orthogonal to the axis C is referred to as a radial direction D of the tubular body 20.

The tubular body 20 has a cylindrical shape. However, a sectional shape of the tubular body 20 may be a shape other than a circular shape. The tubular body 20 includes a first tubular portion 31 and a second tubular portion 32. The first tubular portion 31 includes the first end opening P1. The second tubular portion 32 includes the second end opening P2. The first tubular portion 31 of the present embodiment has a tubular shape having a constant diameter. However, the shape of the first tubular portion 31 is not limited to this. For example, the shape of the first tubular portion 31 may be a shape extending along an inner peripheral surface of the heating target object 5. A length of the first tubular portion 31 is not especially limited and may be set according to need. An outer shape of the second tubular portion 32 expands in the radial direction D toward the second end opening P2. An outer peripheral surface of the second tubular portion 32 increases in diameter in the radial direction D toward the second end opening P2. The second end opening P2 of the present embodiment is larger than the first end opening P1. An inner peripheral surface of the second tubular portion 32 increases in diameter in the radial direction D toward the second end opening P2.

In a sectional view of the tubular body 20 along the axis C, the second tubular portion 32 has a funnel shape which continuously expands toward the second end opening P2 so as to have a concave shape that is concave toward the internal passage P. To be specific, the second tubular portion 32 has a shape that recurves like a trumpet. In other words, a circular-arc section of the second tubular portion 32 along the axis C has a shape that is concave inward in the radial direction D such that a circular-arc center O thereof is located outside the tubular body 20. The curvature of a curved sectional shape of the second tubular portion 32 does not have to be constant.

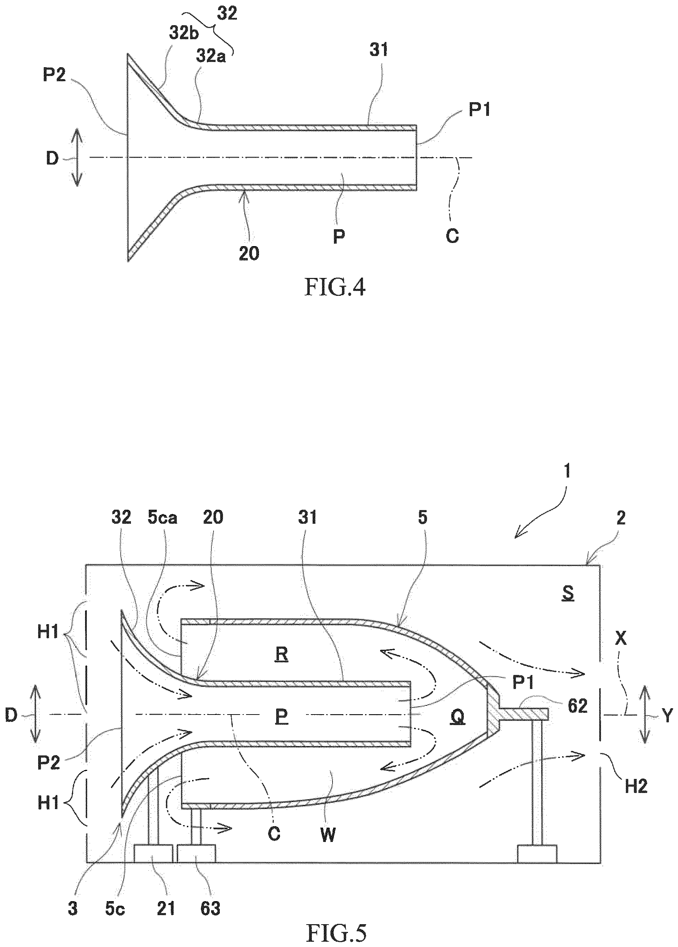

FIG. 4 is a sectional view of a modified example of the tubular body 20 of FIG. 3. As shown in FIG. 4, the second tubular portion 32 of the tubular body 20 may include: a curved expanding portion 32a which is adjacent to the first tubular portion 31 and has a concave shape that is concave toward the internal passage P; and a linear expanding portion 32b which linearly expands from the curved expanding portion 32a toward the second end opening P2. To be specific, the second tubular portion 32 of the tubular body 20 may have a funnel shape that linearly expands, instead of a funnel shape that is entirely curved.

FIG. 5 is a sectional view showing that the auxiliary molding equipment 3 of FIG. 3 is located in the heating passage S of the autoclave 2 of FIG. 1. As shown in FIG. 5, the tubular body 20 is located such that the first tubular portion 31 is inserted in the internal space W of the heating target object 5. The tubular body 20 is spaced apart from the heating target object 5. The tubular body 20 is located such that the axis C thereof extends in the axial direction X of the heating passage S. To be specific, the tubular body 20 is located such that the radial direction D thereof is directed in the radial direction Y of the heating passage S.

Specifically, the first tubular portion 31 is located such that the first end opening P1 is opposed to the bottom portion 5b of the heating target object 5 and is directed toward one side in the axial direction X of the heating passage S. The second tubular portion 32 of the tubular body 20 is located so as to project to an outside of the heating target object 5 through the opening 5c of the heating target object 5. The opening 5c of the heating target object 5 includes an annular opening 5ca. The annular opening 5ca is defined between the heating target object 5 and the tubular body 20. When viewed from a side, where the inlet ports H1 are located, in the axial direction X, the annular opening 5ca is covered with the second tubular portion 32 of the tubular body 20. A largest-diameter portion of the second tubular portion 32 of the tubular body 20 may be larger in diameter than an end portion of the heating target object 5, the end portion being located close to the inlet ports H1.

The supporting body 21 is fixed to the second tubular portion 32, and the second tubular portion 32 is connected to the autoclave 2. Thus, the supporting body 21 supports the tubular body 20. The tubular body 20 is cantilevered by the supporting body 21. Instead of or in addition to the supporting body 21, the auxiliary molding equipment 3 may include a supporting body fixed to the first tubular portion 31. To be specific, the supporting body fixed to the first tubular portion 31 may support the first tubular portion 31 of the tubular body 20 by being connected to the autoclave 2 or the molding jig 6. The supporting body 21 may connect the tubular body 20 to the autoclave 2 or to the heating target object 5 as long as the gas flow in a unidirectional passage is not interfered. Moreover, the structure of the supporting body 21 is not especially limited as long as the supporting body 21 can fix the tubular body 20 to the autoclave 2 or the heating target object 5. The autoclave 2 and the auxiliary molding equipment 3 constitute molding equipment 1.

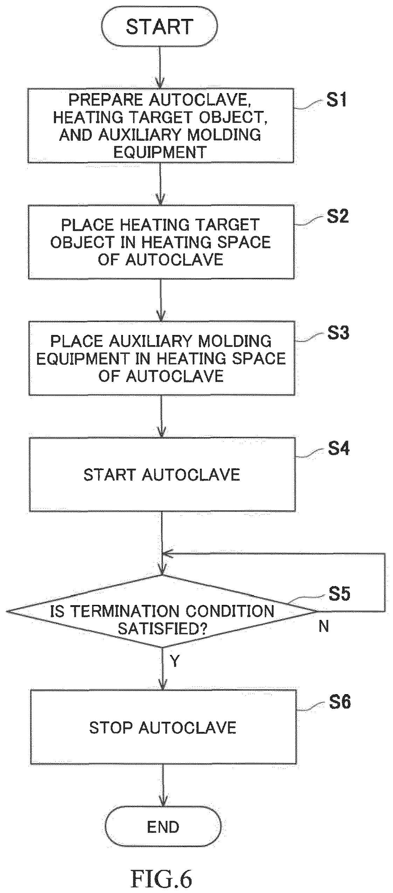

FIG. 6 is a flowchart for explaining a molding procedure of the molding target object 7 by a manufacturer. The manufacturer denotes a concept including one or both of a worker and automatic working equipment, such as a robot. Hereinafter, the procedure will be described based on the flow of FIG. 6 with reference to FIG. 5, etc. First, the manufacturer prepares the autoclave 2, the heating target object 5, and the auxiliary molding equipment 3 (Step S1). Next, in a state where the end wall portion 11c of the autoclave 2 and the straightening plate portions 12b are open, the manufacturer places the bottomed tubular heating target object 5 in the heating passage S of the autoclave 2 such that the opening 5c of the heating target object 5 is directed toward the inlet ports H1 (Step S2).

Next, the manufacturer places the auxiliary molding equipment 3 in the heating passage S of the autoclave 2 (Step S3). At this time, the manufacturer inserts the first tubular portion 31 of the tubular body 20 into the internal space W of the heating target object 5, makes the second tubular portion 32 of the tubular body 20 project to an outside of the heating target object 5 through the opening 5c, and makes the supporting body 21 support the tubular body 20. Thus, the first end opening P1 of the tubular body 20 is opposed to the bottom portion 5b of the heating target object 5, and the second end opening P2 of the tubular body 20 is opposed to the inlet ports H1.

The manufacturer closes the end wall portion 11c and the straightening plate portions 12b and starts the autoclave 2 (Step S4). To be specific, the heater 13 and the fan 14 operate based on a predetermined setting. Thus, the circulation of the heating gas is generated in the autoclave 2, and the flow of the heating gas from the inlet ports H1 to the outlet ports H2 is generated in the heating passage S.

Specifically, the internal space W of the bottomed tubular heating target object 5 is divided into: the internal passage P of the tubular body 20; an annular passage R between an outer peripheral surface of the first tubular portion 31 and the inner peripheral surface of the heating target object 5; and a return passage Q between the bottom portion 5b of the heating target object 5 and the first tubular portion 31. Therefore, as shown by two-dot chain line arrows in FIG. 5, the unidirectional passage including the internal passage P, the return passage Q, and the annular passage R is formed in the internal space W of the heating target object 5. The outer shape of the second tubular portion 32 of the tubular body 20 expands toward the second end opening P. Thus, regarding the heating gas flowing through the heating passage S, there is a difference between the ease of the flow of the heating gas into the annular passage Q and the ease of the flow of the heating gas into the internal passage P of the tubular body 20.

In the present embodiment, when viewed from a side, where the inlet ports H1 are located, in the axial direction X, the annular passage R is hidden by the second tubular portion 32. Therefore, the heating gas which has flowed into the heating passage S through the inlet ports H1 flows into the internal passage P through the second end opening P2 of the tubular body 20 more easily than directly flowing into the annular opening 5ca. As a result, a unidirectional flow of the heating air flowing through the internal passage P, the return passage Q, and the annular passage R in this order is generated, and the heating gas hardly stays in the internal space W of the heating target object 5. The heating gas which has flowed out from the annular passage R through the annular opening 5ca makes a U-turn by being guided by the curved outer peripheral surface of the second tubular portion 32. Then, the heating gas flows through an outside of the heating target object 5 in the axial direction X and flows out through the outlet ports H2.

The autoclave 2 continues to operate until a predetermined termination condition is satisfied (No in Step S5). For example, the predetermined termination condition may be the elapse of a predetermined time or the completion of steps of increasing the temperature at a predetermined rate, keeping a constant temperature for a predetermined keeping time, and decreasing the temperature at a predetermined rate. When the termination condition is satisfied (Yes in Step S5), the autoclave 2 stops the operation (Step S6).

According to the above-described configuration, the flow in the unidirectional passage including the internal passage P, the return passage Q, and the annular passage R is generated by the use of the auxiliary molding equipment 3, and the heating gas hardly stays in the internal space W of the heating target object 5. Therefore, the heating gas can be made to properly flow through a side where the inner peripheral surface of the heating target object 5 is located. As a result, the temperature of the heating target object 5 can be increased or decreased at a predetermined rate, and the heating target object 5 can be uniformly heated.

In the tubular body 20, the second end opening P2 is larger than the first end opening P1. Therefore, the flow of the heating gas between the heating passage S of the autoclave 2 and the internal passage P of the tubular body 20 through the second end opening P2 can be made smooth.

The outer shape of the second tubular portion 32 is a curved sectional shape that expands toward the second end opening P2 so as to have a concave shape that is concave toward the internal passage P. Specifically, the outer shape of the second tubular portion 32 is a shape that recurves like a trumpet. Therefore, the flow of the heating gas between the annular passage R at the outer peripheral surface of the first tubular portion 31 and the passage at an outer peripheral surface of the heating target object 5 can be made smooth.

The tubular body 20 is connected to the autoclave 2 or the heating target object 5 by the supporting body 21. Therefore, the tubular body 20 located in the internal space W of the heating target object 5 can be easily maintained to be spaced apart from the heating target object 5.

### Embodiment 2

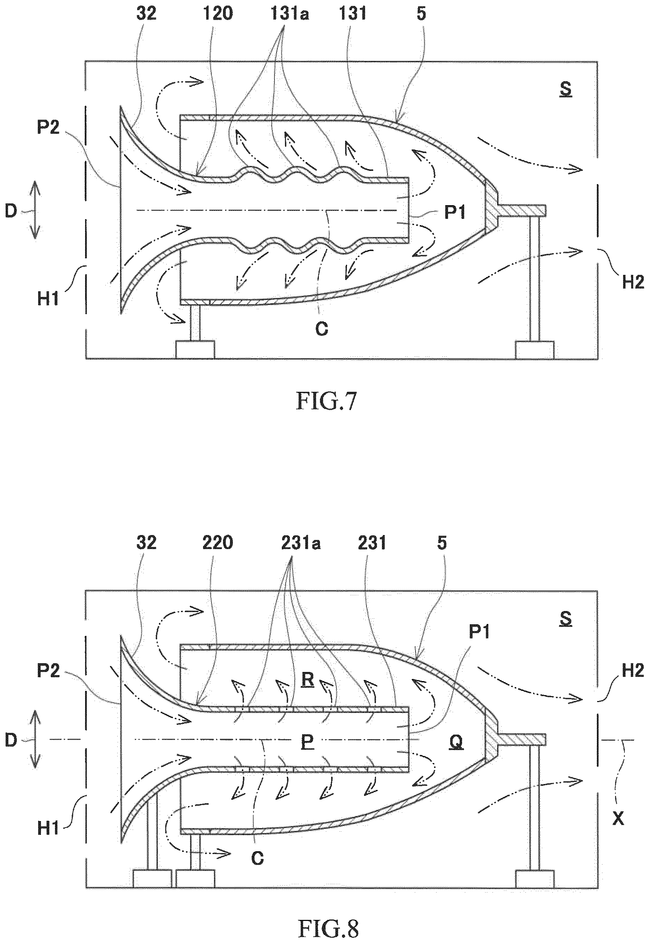

FIG. 7 is a sectional view showing a tubular body 120 and the like according to Embodiment 2. The same reference signs are used for the same components as in Embodiment 1, and explanations thereof are omitted. As shown in FIG. 7, an outer peripheral surface of a first tubular portion 131 of the tubular body 120 includes one or more projections 131a. In the present embodiment, the projections 131a are located on the outer peripheral surface of the first tubular portion 131 so as to be lined up along the axis C of the first tubular portion 131. The projections 131a include annular projections that continuously extend in a circumferential direction.

Specifically, an outer shape of the first tubular portion 131 is a bellows shape. According to this, the heating gas flowing along the outer peripheral surface of the first tubular portion 131 partially diffuses in the radial direction D by the projections 131a, and this can promote the temperature increase of the inner peripheral surface of the heating target object 5. The projection may be a fin that projects outward from the outer peripheral surface of the first tubular portion having a constant diameter. The fin may be a plate, and the plate may include an opening. Moreover, a metal net or fence may be located as the fin. Projections may be located on the outer peripheral surface of the first tubular portion discontinuously in the circumferential direction. Moreover, as shown in FIG. 7, each of the outer peripheral surface and inner peripheral surface of the first tubular portion 131 has a bellows shape. However, the thickness of the first tubular portion may be changed, and the shape of the inner peripheral surface of the first tubular portion may be a tubular shape having a uniform diameter. Since the other components are the same as those in Embodiment 1, explanations thereof are omitted.

### Embodiment 3

FIG. 8 is a sectional view showing a tubular body 220 and the like according to Embodiment 3. The same reference signs are used for the same components as in Embodiment 1, and explanations thereof are omitted. As shown in FIG. 8, a first tubular portion 231 of the tubular body 220 includes holes 231a. The holes 231a are open in the radial direction D of the first tubular portion 231. In the present embodiment, the holes 231a are located on an outer peripheral surface of the first tubular portion 231 so as to be lined up in the circumferential direction of the first tubular portion 231 and also lined up along the axis C of the first tubular portion 231. Thus, part of the heating gas which has flowed through the second end opening P2 into the internal passage P bypasses the return passage Q and flows through the holes 231a to the annular passage R outward in the radial direction D, and this can promote the temperature increase of the inner peripheral surface of the heating target object 5. Since the other components are the same as those in Embodiment 1, explanations thereof are omitted.

### Embodiment 4

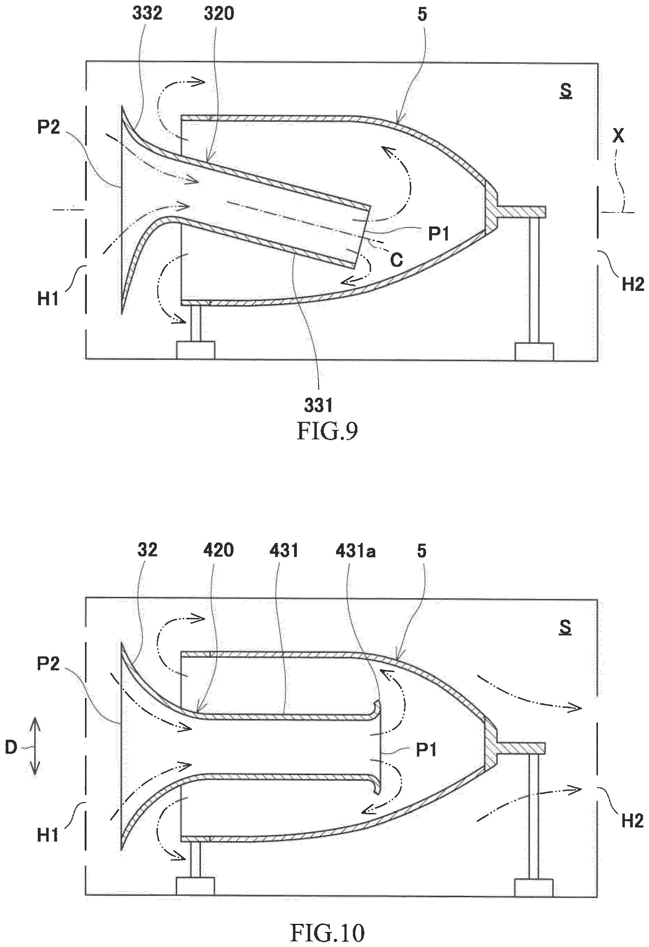

FIG. 9 is a sectional view showing a tubular body 320 and the like according to Embodiment 4. The same reference signs are used for the same components as in Embodiment 1, and explanations thereof are omitted. As shown in FIG. 9, the tubular body 320 includes a first tubular portion 331 and a second tubular portion 332. The first tubular portion 331 includes the first end opening P1. The first end opening P1 of the first tubular portion 331 is directed in a direction that is inclined at an angle relative to the axial direction X. The second tubular portion 332 includes the second end opening P2 opposed to the inlet ports H1. In the present embodiment, the axis C of the first tubular portion 331 is inclined relative to the axial direction X. For example, the first tubular portion 331 is located such that the first end opening P1 is opposed to the tubular portion 5a of the heating target object. According to this, the heating gas which flows out from the first end opening P1 of the tubular body 320 can particularly increase the temperature of a specific portion of the inner peripheral surface of the heating target object 5. Since the other components are the same as those in Embodiment 1, explanations thereof are omitted.

### Embodiment 5

FIG. 10 is a sectional view showing a tubular body 420 and the like according to Embodiment 5. The same reference signs are used for the same components as in Embodiment 1, and explanations thereof are omitted. As shown in FIG. 10, a first tubular portion 431 of the tubular body 420 includes a flare portion 431a which is located at an end portion close to the first end opening P1 and expands toward the first end opening P1. For example, the flare portion 431a has a shape that recurves like a trumpet. According to this, the heating gas which has flowed out from the first end opening P1 of the tubular body 420 easily spreads outward in the radial direction D of the first tubular portion 431. To be specific, the flow of the heating gas can be promoted by the flare portion 431a. Since the other components are the same as those in Embodiment 1, explanations thereof are omitted.

### Embodiment 6

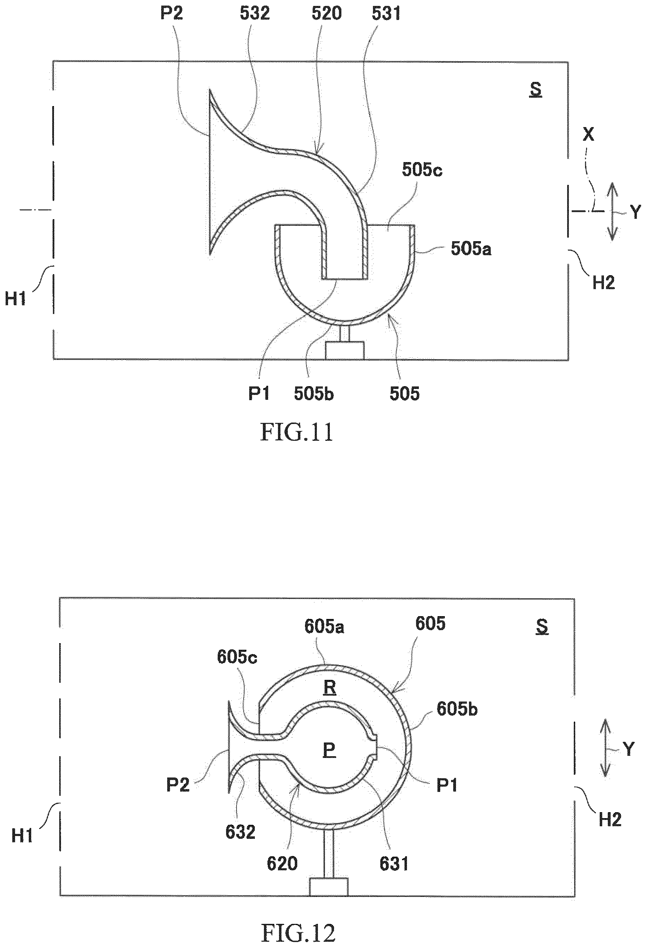

FIG. 11 is a sectional view showing a tubular body 520 and the like according to Embodiment 6. The same reference signs are used for the same components as in Embodiment 1, and explanations thereof are omitted. As shown in FIG. 11, a bottomed tubular heating target object 505 is located such that an opening 505c thereof is directed in a direction intersecting with the axial direction X of the heating passage S, i.e., for example, in the radial direction Y. To be specific, the heating target object 505 is located such that the axis of a tubular portion 505a thereof is directed in the radial direction Y of the heating passage S. The tubular body 520 includes a first tubular portion 531 and a second tubular portion 532. The first tubular portion 531 is inserted into the opening 505c of the heating target object 505. The second tubular portion 532 projects outward from the opening 505c of the heating target object 505. Moreover, the second tubular portion 532 includes the second end opening P2. The second end opening P2 is opposed to the inlet ports H1.

For example, the first tubular portion 531 curves and extends in an L shape. The first end opening P1 of the first tubular portion 531 is opposed to a bottom portion 505b of the heating target object 505. The direction of the first end opening P1 and the direction of the second end opening P2 are different from each other by, for example, 90°. According to this, even when the heating target object 505 is located such that the opening 505c is directed in a direction intersecting with the axial direction X of the heating passage S, the heating gas can be made to properly flow through a side where an inner peripheral surface of the heating target object 505 is located. Since the other components are the same as those in Embodiment 1, explanations thereof are omitted.

### Embodiment 7

FIG. 12 is a sectional view showing a tubular body 620 and the like according to Embodiment 7. The same reference signs are used for the same components as in Embodiment 1, and explanations thereof are omitted. As shown in FIG. 12, a bottomed tubular heating target object 605 has a shape corresponding to part of a hollow sphere. The heating target object 605 includes an opening 605c through which the internal space W is open. The heating target object 605 includes a bottom portion 605b that is a portion opposite to the opening 605c. Moreover, the heating target object 605 includes a tubular portion 605a that is a portion between the bottom portion 605b and the opening 605c. A section of the tubular portion 605a when viewed in the radial direction D of the tubular body 620 has a circular-arc shape. Moreover, a section of the bottom portion 605b when viewed in the radial direction D of the tubular body 620 has a circular-arc shape.

The tubular body 620 includes a first tubular portion 631 and a second tubular portion 632. The first tubular portion 631 is inserted into the opening 605c of the heating target object 605. The second tubular portion 632 projects to an outside of the heating target object 605 through the opening 605c. Moreover, the second tubular portion 632 includes the second end opening P2. The second end opening P2 is opposed to the inlet ports H1. An outer shape of the second tubular portion 632 expands toward the second end opening P2. Moreover, the shape of the first tubular portion 631 extends along an inner surface of the heating target object 605. Specifically, as shown in FIG. 12, for example, since the inner surface of the heating target object 605 has a spherical shape, the first tubular portion 631 has a shape corresponding to part of a spherical surface. According to this, even when the heating target object 605 has a shape corresponding to part of the hollow sphere, the annular passage R whose sectional shape along a proceeding direction of the gas flow smoothly changes can be obtained. Therefore, the heating gas can be made to properly flow through a side where an inner peripheral surface of the heating target object 605 is located. Since the other components are the same as those in Embodiment 1, explanations thereof are omitted.

### Embodiment 8

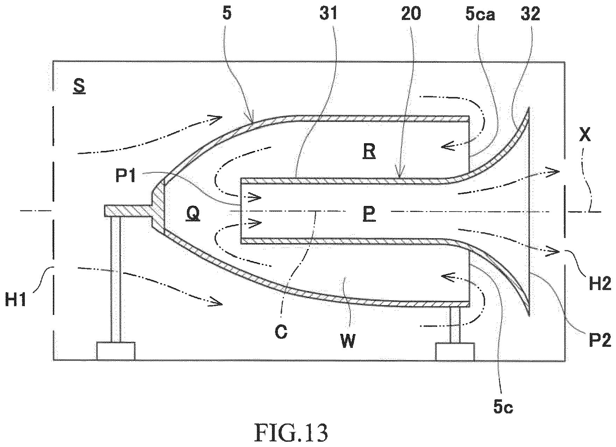

FIG. 13 is a sectional view showing the tubular body 20 and the like according to Embodiment 8. The same reference signs are used for the same components as in Embodiment 1, and explanations thereof are omitted. As shown in FIG. 13, although the heating target object 5 and the tubular body 20 in the present embodiment are the same as those in Embodiment 1, the heating target object 5 and the tubular body 20 in the present embodiment are located so as to be opposite to those in Embodiment 1 in the axial direction X.

Specifically, the heating target object 5 is located such that: the bottom portion 5b is located in a region of the heating passage S, the region being located close to the inlet ports H1; and the opening 5c is located in a region of the heating passage S, the region being located close to the outlet ports H2. The tubular portion 5a has a streamline shape that tapers toward the inlet ports H1. The internal space W of the heating target object 5 is open toward the outlet ports H2 through the opening 5c.

The first tubular portion 31 of the tubular body 20 is inserted into the internal space W of the heating target object 5. The second tubular portion 32 of the tubular body 20 projects to an outside of the heating target object 5 through the opening 5c. To be specific, a relative positional relation between the heating target object 5 and the tubular body 20 in the present embodiment is the same as a relative positional relation between the heating target object 5 and the tubular body 20 in Embodiment 1. The opening 5c of the heating target object 5 includes the annular opening 5ca defined between the heating target object 5 and the tubular body 20. When viewed from a side, where the outlet ports H2 are located, in the axial direction X, the annular opening 5ca is covered with the second tubular portion 32 of the tubular body 20. It is preferable that a largest-diameter portion of the second tubular portion 32 of the tubular body 20 be larger in diameter than an end portion of the heating target object 5, the end portion being located close to the outlet ports H2.

The heating gas which has flowed through the inlet ports H1 into the heating passage S flows through an outside of the heating target object 5 in the axial direction X. Then, the heating gas is guided by the outer peripheral surface of the second tubular portion 32 of the tubular body 20 to flow into the annular passage R. As a result, a unidirectional flow of the the heating air flowing through the annular passage R, the return passage Q, and the internal passage P in this order is generated. Thus, the heating gas which has flowed out from the internal passage P of the tubular body 20 through the second end opening P2 flows out through the outlet ports H2. Therefore, the heating gas hardly stays in the internal space W of the heating target object 5, and the heating gas can be made to properly flow through a side where the inner peripheral surface of the heating target object 5 is located. Since the other components are the same as those in Embodiment 1, explanations thereof are omitted.

The foregoing has described the embodiments as examples of the technology disclosed in the present application. However, the technology in the present disclosure is not limited to this and is applicable to embodiments in which modifications, replacements, additions, omissions, and the like have been suitably made. Moreover, a new embodiment may be prepared by combining the components described in the above embodiments. For example, some of components or methods in one embodiment may be applied to another embodiment. Some components in an embodiment may be separated from the other components in the embodiment and arbitrarily extracted. Furthermore, the components shown in the attached drawings and the detailed explanations include not only components essential to solve the problems but also components for exemplifying the above technology and not essential to solve the problems.

### Reference Signs List

1 molding equipment
2 autoclave
3 auxiliary molding equipment
5, 505, 605 heating target object
5c, 505c, 605c opening
6 molding jig
7 molding target object
20, 120, 220, 320, 420, 520, 620 tubular body
21 supporting body
31, 131, 231, 331, 431, 531, 631 first tubular portion
32, 332, 532, 632 second tubular portion
131a projection
231a hole
C axis
H1 inlet port
H2 outlet port
P internal passage
P1 first end opening
P2 second end opening
Q return passage
R annular passage
S heating passage
W internal space
X axial direction

## Claims

1. Auxiliary molding equipment that heats a bottomed tubular heating target object in a heating passage with an autoclave to mold a molding target object, the autoclave including the heating passage including an inlet port into which a heating gas flows and an outlet port from which the heating gas flows out, the heating target object including the molding target object and an opening,
the auxiliary molding equipment comprising
a tubular body including
a first end opening,
a second end opening located at an opposite side of the first end opening, and
an internal passage through which the first end opening and the second end opening communicate with each other, wherein
the tubular body includes
a first tubular portion that includes the first end opening and is located in an internal space of the heating target object and
a second tubular portion that includes the second end opening, is located so as to project to an outside of the heating target object through the opening of the heating target object, and has an outer shape expanding toward the second end opening.

2. The auxiliary molding equipment for a composite according to claim 1, wherein the second end opening is larger than the first end opening.

3. The auxiliary molding equipment for a composite according to claim 1 or 2, wherein in a sectional view along an axis of the second tubular portion, the outer shape of the second tubular portion is a funnel shape that expands toward the second end opening.

4. The auxiliary molding equipment for a composite according to any one of claims 1 to 3, wherein an outer peripheral surface of the first tubular portion includes a projection.

5. The auxiliary molding equipment for a composite according to any one of claims 1 to 4, wherein the first tubular portion includes at least one hole that is open in a radial direction of the first tubular portion.

6. The auxiliary molding equipment for a composite according to any one of claims 1 to 5, further comprising a supporting body that connects the tubular body to the autoclave or the heating target object to support the tubular body.

7. The auxiliary molding equipment for a composite according to any one of claims 1 to 6, wherein:
the heating target object includes
a tubular portion,
a bottom portion that closes one side of the tubular portion in an axial direction, and
an opening located at the other side of the tubular portion in the axial direction; and
the tubular body is located such that the first end opening of the first tubular portion is opposed to the bottom portion of the heating target object.

8. The auxiliary molding equipment for a composite according to any one of claims 1 to 6, wherein:
the heating target object includes
a tubular portion,
a bottom portion that closes one side of the tubular portion in an axial direction, and
an opening located at the other side of the tubular portion in the axial direction; and
the tubular body is located such that the first end opening of the first tubular portion is opposed to the tubular portion of the heating target object.

9. Molding equipment comprising:
the auxiliary molding equipment according to any one of claims 1 to 8; and
an autoclave including a heating passage including an inlet port into which a heating gas flows and an outlet port from which the heating gas flows out.

10. A molding method comprising:
preparing an autoclave including a heating passage including an inlet port into which a heating gas flows and an outlet port from which the heating gas flows out;
placing a bottomed tubular heating target object in the heating passage, the heating target object including a molding target object and an opening;
preparing a tubular body including
a first tubular portion that includes a first end opening,
a second tubular portion that includes a second end opening located at an opposite side of the first end opening and has an outer shape expanding toward the second end opening, and
an internal passage through which the first end opening and the second end opening communicate with each other;
placing the tubular body in the heating passage such that the first tubular portion of the tubular body is located in an internal space of the heating target object, and the second tubular portion of the tubular body is located so as to project to an outside of the heating target object through the opening of the heating target object; and
generating a flow of the heating gas from the inlet port to the outlet port in the heating passage.

11. The molding method according to claim 10, wherein placing the tubular body includes placing the tubular body such that the second end opening is directed toward the inlet port of the heating passage.
